# EUROPEAN PATENT SPECIFICATION

(11) **EP 3 162 108 B1**
(45) Date of publication and mention of the grant of the patent: **07.11.2018**
(21) Application number: 14734433.7
(22) Date of filing: 25.06.2014
(51) Int. Cl.: H04W 24/04

(54) **NETWORK ASSISTED ALTERNATE COVERAGE IN A CELLULAR COMMUNICATIONS NETWORK**
NETZWERKUNTERSTÜTZTE ALTERNATIVE FUNKABDECKUNG IN EINEM MOBILFUNKKOMMUNIKATIONSNETZ
COUVERTURE ALTERNATIVE ASSISTÉE PAR RÉSEAU DANS UN RÉSEAU DE COMMUNICATION CELLULAIRE

(43) Date of publication of application: 03.05.2017
(73) Proprietor: Nokia Solutions and Networks Oy, 02610 Espoo (FI)
(72) Inventor: LAKSHMI NARAYANAN, Ram, Pleasanton, California 94566 (US); VELAYUTHAM, Somasundaram, Santa Clara, California 95051 (US)
(74) Representative: Borgström, Markus
(86) International application number: PCT/EP2014/063382
(87) International publication number: WO 2015/197116

(56) References cited:
- US-A1- 2012 163 235
- US-A1- 2014 003 239
- US-A1- 2014 044 024
- MAJID S ET AL: "Mobile Handsets as Sensing Nodes in an Auto-Configured Hierarchical Cognitive Radio Network Scheme for Immediate Post-Disaster Communications", IEICE TRANSACTIONS ON COMMUNICATIONS, COMMUNICATIONS SOCIETY, TOKYO, JP, vol. E92B, no. 7, 1 July 2009 (2009-07-01) , pages 2397-2405, XP001547792, ISSN: 0916-8516, DOI: 10.1587/TRANSCOM.E92.B.2397
- "3rd Generation Partnership Project; Technical Specification Group Services and System Aspects; Study on architecture enhancements to support Proximity-based Services (ProSe) (Release 12)", 3GPP STANDARD; 3GPP TR 23.703, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V2.0.0, 10 March 2014 (2014-03-10), pages 1-324, XP050769634,

## Description

### FIELD OF THE INVENTION

The invention relates generally to mobile communications. In particular, the invention relates to network assisted alternate coverage in a cellular communications network.

### BACKGROUND OF THE INVENTION

MAJID S ET AL: "Mobile Handsets as Sensing Nodes in an Auto-Configured Hierarchical Cognitive Radio Network Scheme for Immediate Post-Disaster Communications", IEICE TRANSACTIONS ON COMMUNICATIONS, COMMUNICATIONS SOCIETY, TOKYO, JP, vol. E92B, no. 7, 1 July 2009 (2009-07-01), pages 2397-2405, XP001547792, ISSN: 0916-8516, DOI: 10.1587/TRANSCOM.E92.B.2397 proposes that for the emergency situations, an Emergency Beacon Message (EBM) is transmitted on some pre-assigned channel (e.g., ISM band etc.) and all mobile handset nodes working in normal/cellar mode overhear the EBM if broadcasted.

3^{rd} Generation Partnership Project; Technical Specification Group Services and System Aspects; Study on architecture enhancements to support Proximity-based Services (ProSe) (Release 12)", 3GPP STANDARD; 3GPP TR 23.703, 3RD GENERATION PARTNERSHIP PROJECT (3GPP), MOBILE COMPETENCE CENTRE; 650, ROUTE DES LUCIOLES; F-06921 SOPHIA-ANTOPOLIS CEDEX; FRANCE, vol. SA WG2, no. V2.0.0, 10 March 2014 (2014-03-10), pages 1-324, XP50769634) discloses an eNB initiating ProSe communication preparation procedure towards a UE-A and a UE-B by scheduling radio frequency, transmission power (based on UE range class information), and uplink/downlink radio resource of announcing/monitoring UEs for guiding ProSe direct discovery between the UE-A and UE-B.

A cellular communications network must be kept operational during periodic and non-periodic temporary failures. Periodic events, such as a scheduled maintenance upgrade to hardware and/or software, and/or configuration changes to an existing network and its associated network elements often create side-effects and therefore service degradation. In such cases, it is difficult to troubleshoot the network. Furthermore, non-periodic events, such as equipment failure, a software crash or structural problems in a tower, or an outage causes a base station or a portion of a cell or a sector to be non-operational. Also, when a component of a sector or a tower or a link fails, the entire site will be down. Most of the time it is the operator's responsibility to keep these sites up and running all the time. If a first round of troubleshooting fails, only then network maintenance or equipment vendor people may typically be involved. During all this time, users within the coverage area of the cell are impacted.

Therefore, an object of the present invention is to alleviate the problems described above and to introduce a solution that allows network assisted alternate coverage in a cellular communications network during at least partial cell outage event or a maintenance event.

### SUMMARY OF THE INVENTION

A first aspect of the present invention is a mobile communications device, comprising at least one processor configured to cause switching from a cellular communications mode to an out of band communications mode in response to an indication of an at least partial cell outage event or a maintenance event, and based on mobile communications device specific out of band communication proximity information generated for the mobile communications device received from a cellular network base station during start-up of the mobile communication device, wherein the at least one processor is further configured to cause: performing communications as needed in said out of band communications mode; and switching from the out of band communications mode back to the cellular communications mode in response to receiving a message to switch back to the cellular communications mode.

A second aspect of the present invention is a method of providing network assisted alternate coverage in a cellular communications network, the method comprising switching a mobile communications device from a cellular communications mode to an out of band communications mode in response to an indication of an at least partial cell outage event or a maintenance event, and based on mobile communications device specific out of band communication proximity information generated for the mobile communications device received from a cellular network base station during start-up of the mobile communication device, wherein the method further comprises: performing communications as needed in said out of band communications mode by the mobile communications device; and switching the mobile communications device from the out of band communications mode back to the cellular communications mode in response to receiving a message to switch back to the cellular communications mode.

In an example embodiment of the invention, the out of band communication proximity information is exchanged with at least one other mobile communications device located in a same cell.

In an example embodiment of the invention, out of band communication proximity messages received from at least one other mobile communications device located in a same cell are forwarded to the cellular network base station.

In an example embodiment of the invention, the cellular network is at least partially based on long-term evolution, LTE, technology and the out of band communication comprises device to device communication.

In an example embodiment of the invention, the out of band communication comprises device to device communication.

The invention allows network assisted alternate coverage in a cellular communications network during at least partial cell outage event or a maintenance event.

### BRIEF DESCRIPTION OF THE DRAWINGS

The accompanying drawings, which are included to provide a further understanding of the invention and constitute a part of this specification, illustrate example embodiments of the invention and together with the description help to explain the principles of the invention. In the drawings:
**Figure 1** is a communication flow diagram illustrating a method according to an example embodiment of the present invention; and
**Figure 2** is a block diagram illustrating apparatuses and devices according to an example embodiment of the present invention.

### DETAILED DESCRIPTION OF THE INVENTION

Reference will now be made in detail to the example embodiments of the present invention, examples of which are illustrated in the accompanying drawings.

In the following, the invention is illustrated using examples implemented in a cellular communications network utilizing long-term evolution, LTE, based technology. However, it is to be understood that these examples are non-limiting and that example embodiments of the invention may be implemented in any cellular communications network in which base stations and mobile communication devices are able to communicate out of band and D2D. A network may use in-band and out-of-band communications. In in-band communication, information such as for example and not limited to user, user communication traffic and/or state information, is typically communicated over a physical link, channel, or other communication technique beyond and not limited to 3GPP standards. (Examples of state information include and are not limited to control, management and crowd sourcing information.) In out-of-band communication, any of the user, user communication traffic and state information is communicated separately over a different physical link, channel, or other communications technique beyond and not limited 3GPP standards. Furthermore, it is to be understood that the term long-term evolution, as used herein, is intended to cover its various variations, such as LTE Advanced, LTE-A.

The invention utilizes a technology called device-to-device, D2D, communication. Typically, the D2D communication functions as an underlay to a cellular network, operating on the same resources. Besides cellular operation, where user equipment (UE) is served by the network via the base stations, called evolved Node Bs (eNBs) in the LTE architecture, UE units may communicate directly with each other over the D2D links. In normal operation of the network (i.e. outside of cell outage events and maintenance events), the UEs in D2D connections remain controlled by the eNBs and continue cellular operation. The eNBs can control the resources used for cellular communications and by the D2D link. D2D communication is also known as proximity services (ProSe) communication.

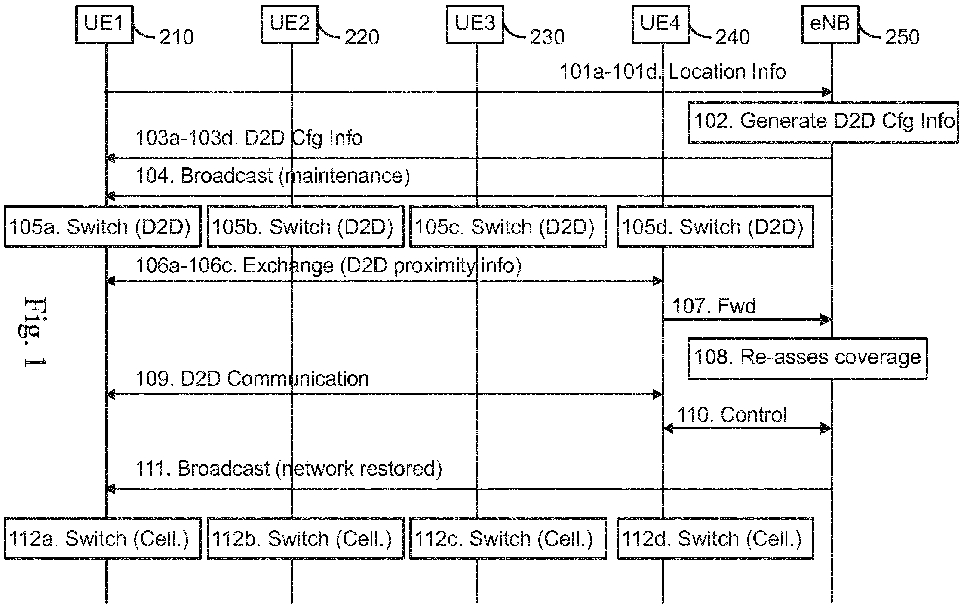

Figure 1 is a communication flow diagram illustrating a method according to an example embodiment of the invention.

At 101a-101d, each of the mobile communications devices 210-240 located in a same cell 200 of the cellular communications network as the cellular communications network base station 250 sends its location information to the base station 250. 101a-101d may be performed e.g. in connection with a network attachment procedure of each mobile communications device 210-240. In addition to the mobile communication devices sending the location information, there are several ways to determine the location of the mobile communication device at any given point in time. Depending upon the need, accuracy and precision, a network operator may enable those algorithms and use them to determine the location of the mobile communication devices.

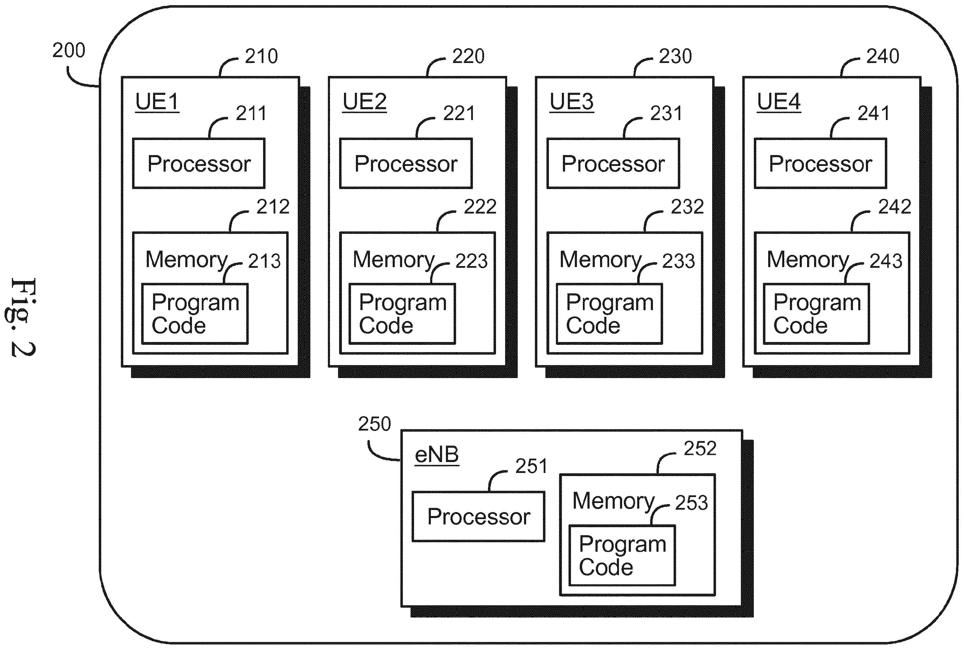

It is to be understood that even though only a base station 250 is illustrated in Figures 1 and 2 for the sake of simplicity, the base station 250 may forward messages and/or information it receives from the mobile communications devices 210-240 to a separate apparatus that is configured to provide a load distribution service. In yet another alternative, the load distribution service may be implemented as software in the base station 250. In these cases, e.g. 102 and/or 108 may be performed by this load distribution service.

At 102, the location of each mobile communications device 210-240 is determined and device-to-device, D2D, configuration information is generated by the base station/load distribution service 250, based on the location information received at 101a-101d. The D2D configuration information is generated specific to each of the number of mobile communications devices 210-240. The D2D configuration information may include e.g. D2D proximity identifiers/identities and/or communication parameters (such as beacon frequency and other radio frequency related information) that can be used in the event of network failures.

At 103a-103d, the generated, mobile communications device specific D2D configuration information is sent to each of the mobile communications devices 210-240. 103a-103d may be performed e.g. as part of a location update procedure during start-up. When mobile communications devices 210-240

Alternatively/additionally, 101a-101d, 102, and/or 103a-103d may be performed e.g. periodically, e.g. to keep the location information up-to-date when the mobile communications devices 210-240 move within the cell 200. In such a case, 102 will also be repeated to re-generate the D2D configuration information. Similarly, 103a-103d will be repeated to re-distribute the re-generated the D2D configuration information.

At 104, an indication of a maintenance event is broadcast from the base station 250 to the mobile communications devices 210-240. Alternatively, in case of an at least partial cell outage event, i.e. an unexpected event, such as a failure due to weather or a software crash, the broadcast message of 104 will not be sent. Instead, at least one of the mobile communications devices 210-240 may e.g. detect its lack of connection with the base station 250, and try to latch to a neighboring base station if it resides in an overlapping coverage area. If that is not possible, it may then proceed to 105a-105d. There may be exceptional scenarios, for example, when all mobile communication devices are in a moving train, and the train is going inside the tunnel, and there is no coverage for several minutes. In those cases, D2D timer configurations may be made in such a way to avoid such false triggers and to avoid unnecessary switching and signaling.

Furthermore, mobile communications devices that are located in cell boundary regions of neighboring cells may be used as D2D relays. Accordingly, they may turn on relay mode operation, and try to discover mobile communications devices that are in the impacted cell region.

At 105a-105d, the mobile communications devices 210-240 are switched from a cellular communications mode to a device-to-device, D2D, communications mode based on D2D configuration information received from the cellular network base station 250 at 103a-103d. Furthermore, mobile communications devices that are located in the impacted cell region, may ensure that there is no direct neighboring cell coverage before the switch of 105a-105d, and that they also receive a beacon of D2D signal to make sure that other participating mobile communications devices are also detecting the absence of base stations.

As discussed above, the D2D configuration information received at 103a-103d may include D2D proximity information that is specific to each of mobile communications devices 210-240 and generated for each of the mobile communications devices 210-240. At 106a-106c, the mobile communications devices 210-240 located in the same cell 200 may exchange their D2D proximity information, including e.g. their D2D proximity identifiers, with each other, and ensure that they can reach the network via adjacent operational cells. In the example of Figure 1, the mobile communications device 240 acts as a D2D gateway for the other mobile communications devices 210-230 in the cell 200. At 107, the mobile communications device 240 relays or forwards D2D proximity messages received from the mobile communications devices 210-230 to the base station 250.

The scenario disclosed in Figure 1 is one of the possible scenarios, and there are also several other possible ways to for a communication link possible. For example, in one other scenario, while exchanging information, mobile communication devices may discover themselves, and form one or more clusters where there are master and slave mobile communication devices. The roles of a master and slave mobile communication devices may be dynamic. The goal of such dynamic formation within that region is that master will be forwarding the packets from that cluster to another cluster to reach the neibgouring cell. The master node is elected, for example, based on proximity, power, and/or other locations dependent information.

At 108, D2D coverage of each of the mobile communications devices 210-240 may be re-assessed by the base station/load distribution service 250 to ensure that each of the mobile communications devices 210-240 is able get connectivity via D2D communication. It is to be understood that 108 may be repeated periodically.

Communications are performed as needed in the D2D communications mode by the mobile communications devices 210-240, 109.

At 110, traffic control is performed for the mobile communications devices 210-240 in D2D communications mode via network control messages, in response to load changes. Load of the base station 250 may change due to movement of any of the mobile communications devices 210-240 and/or due to application usage etc. of the any of the mobile communications devices 210-240. All these may be dynamically learnt via network control messages, and the network may act as a mediator to ensure that D2D proximity communication takes place without any problems.

At a later point in time, when service is restored in the affected area, a message to switch back to the cellular communications mode is broadcast by the base station 250 to the mobile communications devices 210-240, 111. This message may be communicated via network control messages while the D2D communication is happening.

In response to receiving the broadcast message of 111 to switch back to the cellular communications mode, the mobile communications devices 210-240 switch back to the cellular communications mode, 112a-112d.

As discussed above, the invention allows network-assisted, peer-to-peer communication in the event of faults, wherein the network performs mediation and allows controlled, interference free, shortest path and proximity based communication. The network has full control on creation of a D2D session, and it ensures interference free communication. The invention provides a mechanism to use proximity identities in a decentralized and controlled manner, and they can be utilized for network assisted communication.

Figure 2 is a block diagram illustrating apparatuses and devices according to an example embodiment of the present invention. Each of the mobile communications devices 201-240 includes at least one processor 211, 221, 231, 241. Each of the mobile communications devices 201-240 may further include at least one memory 212, 222, 232, 242 including computer program code 213, 223, 233, 243. Each of the mobile communications devices 201-240 may also have a communication module to communicate to remote mobile communication devices and cellular communications network base stations.

The at least one processor 211, 221, 231, 241 is configured to cause:
switching from a cellular communications mode to an out of band communications mode based on out of band communication configuration information received from a cellular network base station 240, in response to an indication of an at least partial cell outage event or a maintenance event;
performing communications as needed in the out of band communications mode; and
switching back to the cellular communications mode in response to receiving a message to switch back to the cellular communications mode.

As discussed in connection with Figure 1, the received out of band communication configuration information may include mobile communications device specific out of band communication proximity information generated for each of the mobile communications devices 210, 220, 230, 240. Each of processors 211, 221, 231, 241 may be further configured to cause exchanging the out of band communication proximity information with at least one other mobile communications device located in a same cell 200.

Furthermore, each of processors 211, 221, 231, 241 may be further configured to cause forwarding out of band communication proximity messages received from at least one other mobile communications device located in the same cell 200 to the cellular network base station.

The apparatus 250 includes at least one processor 251. The apparatus 250 may further include at least one memory 252 including computer program code 253. Furthermore, the apparatus 250 may include a cellular network base station and/or an apparatus configured to provide a load distribution service.

The at least one processor 251 is configured to cause:
generating out of band communication configuration information based on location information of a number of mobile communications devices 210-240 located in a same cell 200 of the cellular communications network, the out of band communication configuration information being specific to each of the number of mobile communications devices 210-240; and
sending to at least one of the number of mobile communications devices 210-240 its specific out of band communication configuration information.

The at least one processor 251 may be further configured to cause broadcasting an indication of a maintenance event to the number of mobile communications devices. The at least one processor 251 may be further configured to cause re-assessing out of band communication coverage of at least one of the number of mobile communications devices 210-240 based on out of band communication proximity messages received from at least one of the number of mobile communications devices 210-240. The at least one processor 251 may be further configured to cause performing traffic control for the number of mobile communications devices 210-240 in out of band communications mode via network control messages, in response to load changes. The at least one processor 251 may be further configured to cause broadcasting a message to switch back to the cellular communications mode to the number of mobile communications devices 210-240.

Although the above examples have used LTE D2D as an example of an out of band communication technology, the disclosed solution is compatible to all types of out of band communication technologies.

The example embodiments can include, for example, any suitable handheld devices, cellular telephones, smart phones, wireless devices, servers, workstations, and the like, capable of performing the methods of the example embodiments. The devices and subsystems of the example embodiments can communicate with each other using any suitable protocol and can be implemented using one or more programmed computer systems or devices.

Example embodiments of the present invention may be implemented in software, hardware, application logic or a combination of software, hardware and application logic. The example embodiments can store information relating to various methods described herein. This information can be stored in one or more memories, such as a hard disk, optical disk, magneto-optical disk, RAM, and the like. One or more databases can store the information used to implement the example embodiments of the present inventions. The databases can be organized using data structures (e.g., records, tables, arrays, fields, graphs, trees, lists, and the like) included in one or more memories or storage devices listed herein. The methods described with respect to the example embodiments can include appropriate data structures for storing data collected and/or generated by the methods of the devices and subsystems of the example embodiments in one or more databases.

All or a portion of the example embodiments can be conveniently implemented using one or more general purpose processors, microprocessors, digital signal processors, micro-controllers, and the like, programmed according to the teachings of the example embodiments of the present inventions, as will be appreciated by those skilled in the computer and/or software art(s). Appropriate software can be readily prepared by programmers of ordinary skill based on the teachings of the example embodiments, as will be appreciated by those skilled in the software art. In addition, the example embodiments can be implemented by the preparation of application-specific integrated circuits or by interconnecting an appropriate network of conventional component circuits, as will be appreciated by those skilled in the electrical art(s). Thus, the example embodiments are not limited to any specific combination of hardware and/or software.

Stored on any one or on a combination of computer readable media, the example embodiments of the present inventions can include software for controlling the components of the example embodiments, for driving the components of the example embodiments, for enabling the components of the example embodiments to interact with a human user, and the like. Such software can include, but is not limited to, device drivers, firmware, operating systems, development tools, applications software, and the like. Such computer readable media further can include the computer program of an example embodiment of the present inventions for performing all or a portion (if processing is distributed) of the processing performed in implementing the inventions. Computer code devices of the example embodiments of the present inventions can include any suitable interpretable or executable code mechanism, including but not limited to scripts, interpretable programs, dynamic link libraries (DLLs), Java classes and applets, complete executable programs, and the like. Moreover, parts of the processing of the example embodiments of the present inventions can be distributed for better performance, reliability, cost, and the like.

As stated above, the components of the example embodiments can include computer readable medium or memories for holding instructions programmed according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Transmission media can include coaxial cables, copper wire, fiber optics, and the like. Transmission media also can take the form of acoustic, optical, electromagnetic waves, and the like, such as those generated during radio frequency (RF) communications, infrared (IR) data communications, and the like. Common forms of computer-readable media can include, for example, a floppy disk, a flexible disk, hard disk, magnetic tape, any other suitable magnetic medium, a CD-ROM, CD±R, CD±RW, DVD, DVD-RAM, DVD±RW, DVD±R, HD DVD, HD DVD-R, HD DVD-RW, HD DVD-RAM, Blu-ray Disc, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

If desired, the different methods discussed herein may be performed in a different order and/or concurrently with each other.

While the present inventions have been described in connection with a number of example embodiments, and implementations, the present inventions are not so limited, but rather cover various modifications, and equivalent arrangements, which fall within the scope of the appended claims.

## Claims

1. A mobile communications device (210, 220, 230, 240), comprising at least one processor (211, 221, 231, 241 configured to cause:
switching from a cellular communications mode to an out of band communications mode in response to an indication of an at least partial cell outage event or a maintenance event, and based on mobile communications device specific out of band communication proximity information generated for the mobile communications device (210, 220, 230, 240) received from a cellular network base station (250) during start-up of the mobile communication device, wherein the at least one processor (211, 221, 231, 241 is further configured to cause:
performing communications as needed in said out of band communications mode; and
switching from the out of band communications mode back to the cellular communications mode in response to receiving a message to switch back to the cellular communications mode.

2. The mobile communications device (210, 220, 230, 240) according to claim 1, wherein the at least one processor (211, 221, 231, 241) is further configured to cause:
exchanging the out of band communication proximity information with at least one other mobile communications device located in a same cell (200).

3. The mobile communications device (210, 220, 230, 240) according to claim 1 or 2, wherein the at least one processor (211, 221, 231, 241) is further configured to cause:
forwarding out of band communication proximity messages received from at least one other mobile communications device located in a same cell (200) to the cellular network base station.

4. The mobile communications device (210, 220, 230, 240) according to any of claims 1-3, wherein the cellular network is at least partially based on long-term evolution technology and the out of band communication comprises device to device communication.

5. The mobile communications device (210, 220, 230, 240) according to any of claims 1-3, wherein the out of band communication comprises device to device communication.

6. A method of providing network assisted alternate coverage in a cellular communications network, the method comprising:
switching (105a-105d) a mobile communications device from a cellular communications mode to an out of band communications mode in response to an indication of an at least partial cell outage event or a maintenance event, and based on mobile communications device specific out of band communication proximity information generated for the mobile communications device received (103a-103d) from a cellular network base station during start-up of the mobile communication device, wherein the method further comprises:
performing (109) communications as needed in said out of band communications mode by the mobile communications device; and
switching (112a-112d) the mobile communications device from the out of band communications mode back to the cellular communications mode in response to receiving (111) a message to switch back to the cellular communications mode.

7. The method according to claim 6, further comprising:
exchanging (106a-106c) the out of band communication proximity information with at least one other mobile communications device located in a same cell.

8. The method according to claim 6 or 7, further comprising:
forwarding (107) out of band communication proximity messages received from at least one other mobile communications device located in a same cell to the cellular network base station.

9. The method according to claim 6, wherein the cellular communications network is at least partially based on long-term evolution technology.

10. The method according to claim 6, wherein the out of band communication comprises device to device communication.

## Patentansprüche

1. Mobile Kommunikationsvorrichtung (210, 220, 230, 240), welche wenigstens einen Prozessor (211, 221, 231, 241) umfasst, der dafür ausgelegt ist zu bewirken:
Umschalten von einem Mobilfunk-Kommunikationsmodus zu einem Out-of-Band-Kommunikationsmodus in Reaktion auf eine Anzeige eines wenigstens teilweisen Zellausfallereignisses oder eines Wartungsereignisses und basierend auf für die mobile Kommunikationsvorrichtung (210, 220, 230, 240) erzeugten, für die mobile Kommunikationsvorrichtung spezifischen Entfernungsinformationen der Out-of-Band-Kommunikation, die während des Hochfahrens der mobilen Kommunikationsvorrichtung von einer Basisstation (250) des Mobilfunknetzes empfangen wurden, wobei der wenigstens eine Prozessor (211, 221, 231, 241) ferner dafür ausgelegt ist zu bewirken:
Durchführen von Kommunikationen nach Bedarf in dem Out-of-Band-Kommunikationsmodus; und
Umschalten von dem Out-of-Band-Kommunikationsmodus zurück zu dem Mobilfunk-Kommunikationsmodus in Reaktion auf das Empfangen einer Nachricht, zum Mobilfunk-Kommunikationsmodus zurückzuschalten.

2. Mobile Kommunikationsvorrichtung (210, 220, 230, 240) nach Anspruch 1, wobei der wenigstens eine Prozessor (211, 221, 231, 241) ferner dafür ausgelegt ist zu bewirken:
Austauschen der Entfernungsinformationen der Out-of-Band-Kommunikation mit wenigstens einer weiteren mobilen Kommunikationsvorrichtung, die sich in derselben Funkzelle (200) befindet.

3. Mobile Kommunikationsvorrichtung (210, 220, 230, 240) nach Anspruch 1 oder 2, wobei der wenigstens eine Prozessor (211, 221, 231, 241) ferner dafür ausgelegt ist zu bewirken:
Weiterleiten von Entfernungsinformationen der Out-of-Band-Kommunikation, die von wenigstens einer weiteren mobilen Kommunikationsvorrichtung empfangen wurden, die sich in derselben Funkzelle (200) befindet, an die Basisstation des Mobilfunknetzes.

4. Mobile Kommunikationsvorrichtung (210, 220, 230, 240) nach einem der Ansprüche 1-3, wobei das Mobilfunknetz wenigstens teilweise auf Long Term Evolution Technologie basiert und die Out-of-Band-Kommunikation Gerät-zu-Gerät-Kommunikation umfasst.

5. Mobile Kommunikationsvorrichtung (210, 220, 230, 240) nach einem der Ansprüche 1-3, wobei die Out-of-Band-Kommunikation Gerät-zu-Gerät-Kommunikation umfasst.

6. Verfahren zum Bereitstellen von netzwerkunterstützter alternativer Funkabdeckung in einem Mobilfunk-Kommunikationsnetz, wobei das Verfahren umfasst:
Umschalten (105a-105d) einer mobilen Kommunikationsvorrichtung von einem Mobilfunk-Kommunikationsmodus zu einem Out-of-Band-Kommunikationsmodus in Reaktion auf eine Anzeige eines wenigstens teilweisen Zellausfallereignisses oder eines Wartungsereignisses und basierend auf für die mobile Kommunikationsvorrichtung erzeugten, für die mobile Kommunikationsvorrichtung spezifischen Entfernungsinformationen der Out-of-Band-Kommunikation, die während des Hochfahrens der mobilen Kommunikationsvorrichtung von einer Basisstation des Mobilfunknetzes empfangen wurden (103a-103d), wobei das Verfahren ferner umfasst:
Durchführen (109) von Kommunikationen nach Bedarf in dem Out-of-Band-Kommunikationsmodus durch die mobile Kommunikationsvorrichtung; und
Umschalten (112a-112d) der mobilen Kommunikationsvorrichtung von dem Out-of-Band-Kommunikationsmodus zurück zu dem Mobilfunk-Kommunikationsmodus in Reaktion auf das Empfangen (111) einer Nachricht, zum Mobilfunk-Kommunikationsmodus zurückzuschalten.

7. Verfahren nach Anspruch 6, welches ferner umfasst:
Austauschen (106a-106c) der Entfernungsinformationen der Out-of-Band-Kommunikation mit wenigstens einer weiteren mobilen Kommunikationsvorrichtung, die sich in derselben Funkzelle befindet.

8. Verfahren nach Anspruch 6 oder 7, welches ferner umfasst
Weiterleiten (107) von Entfernungsinformationen der Out-of-Band-Kommunikation, die von wenigstens einer weiteren mobilen Kommunikationsvorrichtung empfangen wurden, die sich in derselben Funkzelle befindet, an die Basisstation des Mobilfunknetzes.

9. Verfahren nach Anspruch 6, wobei das Mobilfunknetz wenigstens teilweise auf Long Term Evolution Technologie basiert.

10. Verfahren nach Anspruch 6, wobei die Out-of-Band-Kommunikation Gerät-zu-Gerät-Kommunikation umfasst.

## Revendications

1. Dispositif de communication mobile (210, 220, 230, 240), comprenant au moins un processeur (211, 221, 231, 241) qui est configuré de manière à ce qu'il force :
la commutation depuis un mode de communication cellulaire dans un mode de communication hors bande en réponse à une indication d'un événement d'indisponibilité de cellule au moins partielle ou d'un événement de maintenance, et sur la base d'une information de proximité de communication hors bande spécifique du dispositif de communication mobile qui est générée pour le dispositif de communication mobile (210, 220, 230, 240) et qui est reçue depuis une station de base de réseau cellulaire (250) pendant le démarrage du dispositif de communication mobile ; dans lequel :
l'au moins un processeur (211, 221, 231, 241) est en outre configuré de manière à ce qu'il force :
la réalisation de communications en fonction des besoins dans ledit mode de communication hors bande ; et
la commutation depuis le mode de communication hors bande en retour dans le mode de communication cellulaire en réponse à la réception d'un message pour réaliser une commutation en retour dans le mode de communication cellulaire.

2. Dispositif de communication mobile (210, 220, 230, 240) selon la revendication 1, dans lequel l'au moins un processeur (211, 221, 231, 241) est en outre configuré de manière à ce qu'il force :
l'échange de l'information de proximité de communication hors bande avec au moins un autre dispositif de communication mobile qui est localisé dans une même cellule (200).

3. Dispositif de communication mobile (210, 220, 230, 240) selon la revendication 1 ou 2, dans lequel l'au moins un processeur (211, 221, 231, 241) est en outre configuré de manière à ce qu'il force :
le transfert de messages de proximité de communication hors bande qui sont reçus depuis au moins un autre dispositif de communication mobile qui est localisé dans une même cellule (200) sur la station de base de réseau cellulaire.

4. Dispositif de communication mobile (210, 220, 230, 240) selon l'une quelconque des revendications 1 à 3, dans lequel le réseau cellulaire est au moins partiellement basé sur une technologie d'évolution de long terme et la communication hors bande comprend une communication dispositif à dispositif.

5. Dispositif de communication mobile (210, 220, 230, 240) selon l'une quelconque des revendications 1 à 3, dans lequel la communication hors bande comprend une communication dispositif à dispositif.

6. Procédé de fourniture d'une couverture alternative assistée par réseau dans un réseau de communication cellulaire, le procédé comprenant :
la commutation (105a-105d) d'un dispositif de communication mobile depuis un mode de communication cellulaire dans un mode de communication hors bande en réponse à une indication d'un événement d'indisponibilité de cellule au moins partielle ou d'un événement de maintenance, et sur la base d'une information de proximité de communication hors bande spécifique du dispositif de communication mobile qui est générée pour le dispositif de communication mobile et qui est reçue (103a-103d) depuis une station de base de réseau cellulaire pendant le démarrage du dispositif de communication mobile ; dans lequel le procédé comprend en outre :
la réalisation (109) de communications en fonction des besoins dans ledit mode de communication hors bande par le dispositif de communication mobile ; et
la commutation (112a-112d) du dispositif de communication mobile depuis le mode de communication hors bande en retour dans le mode de communication cellulaire en réponse à la réception (111) d'un message pour réaliser une commutation en retour dans le mode de communication cellulaire.

7. Procédé selon la revendication 6, comprenant en outre :
l'échange (106a-106c) de l'information de proximité de communication hors bande avec au moins un autre dispositif de communication mobile qui est localisé dans une même cellule.

8. Procédé selon la revendication 6 ou 7, comprenant en outre :
le transfert (107) de messages de proximité de communication hors bande qui sont reçus depuis au moins un autre dispositif de communication mobile qui est localisé dans une même cellule sur la station de base de réseau cellulaire.

9. Procédé selon la revendication 6, dans lequel le réseau de communication cellulaire est au moins partiellement basé sur une technologie d'évolution de long terme.

10. Procédé selon la revendication 6, dans lequel la communication hors bande comprend une communication dispositif à dispositif.
